# EUROPÄISCHE PATENTSCHRIFT

(11) **EP 3 331 722 B1**
(45) Veröffentlichungstag und Bekanntmachung des Hinweises auf die Patenterteilung: **11.11.2020**
(21) Anmeldenummer: 16762744.7
(22) Anmeldetag: 24.08.2016
(51) Int. Cl.: B60L 50/50

(54) **VERFAHREN ZUR STEUERUNG VON LADEVORGÄNGEN**
METHOD FOR CONTROLLING CHARGING OPERATIONS
PROCEDE DE COMMANDE D'OPÉRATIONS DE CHARGE

(30) Priorität: 09.09.2015 DE 102015217213
(43) Veröffentlichungstag der Anmeldung: 13.06.2018
(73) Patentinhaber: Siemens Aktiengesellschaft, 80333 München (DE)
(72) Erfinder: DUCKHEIM, Mathias, 91052 Erlangen (DE); REINSCHKE, Johannes, 90425 Nürnberg (DE)
(86) Internationale Anmeldenummer: PCT/EP2016/069962
(87) Internationale Veröffentlichungsnummer: WO 2017/042032

(56) Entgegenhaltungen:
- EP-A2- 2 572 925
- US-A1- 2010 134 067
- US-A1- 2011 221 393
- US-A1- 2013 335 033
- US-A1- 2015 266 389

## Beschreibung

Die Erfindung betrifft ein Verfahren zur Steuerung von Ladevorgängen, insbesondere zur Steuerung von Ladevorgängen einer Mehrzahl von Elektrofahrzeugen.

In einer Ladeinfrastruktur, die ein Laden einer Mehrzahl von Elektrofahrzeugen ermöglicht, können innerhalb eines Zeitraumes hohe Leistungsspitzen auftreten, die ein mit der Ladeinfrastruktur verbundenes Stromnetz belasten. Diese Spannungs- oder Leistungsspitzen werden typischerweise von einem Betreiber des Stromnetzes gesondert verrechnet. Ist die Ladeinfrastruktur beispielsweise einem Gebäude zugeordnet, so gibt es typischerweise eine maximale Gesamtladeleistung für das Gebäude, die maximal aus dem Stromnetz abgeführt werden darf. Die maximale Gesamtladeleistung darf zu jedem Zeitpunkt, insbesondere beim Laden der Elektrofahrzeuge, nicht überschritten werden.

Eine Schwierigkeit hierbei ist, dass typischerweise nicht bekannt ist, wie viele weitere Elektrofahrzeuge eintreffen und geladen werden müssen. Insbesondere ist das oben geschilderte Problem auch bei Verteilerstromnetzen von Wohngebieten von Bedeutung. Das ist deshalb der Fall, da beispielsweise durch die annähernd gleichzeitige Ankunft der Bewohner des Wohngebietes, beispielsweise am Abend, und das damit verbundene annähernd zeitgleiche Laden ihrer Elektrofahrzeuge es zu Leistungsspitzen kommen kann.

Nach dem Stand der Technik wird versucht das oben genannte Problem mittels einer Verwendung einfacher Heuristiken zu lösen. Hierbei wird zu jedem Zeitpunkt die zur Verfügung stehende Ladeleistung nach einem vorbestimmten Schlüssel auf die zu ladenden Elektrofahrzeuge verteilt. Weiterhin könnte eine volle Lösung des oben genannten Problems erfolgen, wenn zukünftige Ankunftszeiten und Abfahrtszeiten der Elektrofahrzeuge bekannt sind.

Nachteilig an den nach dem Stand der Technik bekannten Verfahren ist, dass zum einen kein kosteneffizientes Verfahren ermöglicht wird und zum anderen die Ankunftszeiten und Abfahrtszeiten der Elektrofahrzeuge als bekannt vorausgesetzt werden müssen. Typischerweise sind aber die Ankunftszeiten und Abfahrtszeiten der Elektrofahrzeuge im Voraus nicht bekannt. Weiterer relevanter Stand der Technik wird in Dokument US-A-2013335033(Kuribayashi et al) dargestellt.

Der vorliegenden Erfindung liegt die Aufgabe zugrunde, ein verbessertes Verfahren zur Steuerung von Ladevorgängen einer Mehrzahl von Elektrofahrzeugen bereitzustellen, das insbesondere die oben genannten Nachteile des Standes der Technik vermeidet.

Die Aufgabe wird durch ein Verfahren mit den Merkmalen des unabhängigen Patentanspruches 1 gelöst. In den abhängigen Patentansprüchen sind vorteilhafte Ausgestaltungen und Weiterbildungen der Erfindung angegeben.

Das erfindungsgemäße Verfahren zur Steuerung von Ladevorgängen einer Mehrzahl von Elektrofahrzeugen umfasst die folgenden Schritte:
- Bereitstellen eines Datensatzes, der Ankunftszeiten, Abfahrtszeiten und Ladeenergien der Elektrofahrzeuge während eines ersten Zeitraumes umfasst;
- Ermittlung einer minimalen Gesamtladeleistung aus dem Datensatz mittels einer Rechenvorrichtung, wobei die ermittelte minimale Gesamtladeleistung ein annähernd vollständiges Laden jedes Elektrofahrzeuges zwischen seiner Ankunftszeit und Abfahrtszeit ermöglicht; und
- Laden der Elektrofahrzeuge mit höchstens der ermittelten minimalen Gesamtladeleistung während eines dem ersten Zeitraum folgenden zweiten Zeitraumes.

Vorteilhafterweise stellt der Datensatz für den ersten Zeitraum einen bezüglich des zweiten Zeitraumes historischen Datensatz dar, mittels dem, in Bezug auf die minimale Gesamtladeleistung, eine ausreichende Prognose für den zweiten Zeitraum gefunden werden kann. Innerhalb des zweiten Zeitraumes kann somit die aus dem Datensatz des ersten Zeitraumes gewonnene minimale Gesamtladeleistung als Prognose für das Laden der Elektrofahrzeuge innerhalb des zweiten Zeitraumes verwendet werden.

Durch die erfindungsgemäße Ermittlung der minimalen Gesamtladeleistung ist es vorteilhafterweise möglich, beispielsweise mittels bekannter Heuristiken, eine Steuerung der Ladevorgänge zu bewirken, die vorteilhafterweise in ihrem Ergebnis nur geringfügig schlechter ist als ein Ergebnis, welches man mit einer vollen Vorabkenntnis aller erforderlichen Daten, das heißt der Ankunftszeiten, Abfahrtszeiten sowie Ladeenergien für alle Elektrofahrzeuge im zweiten Zeitraum, erreichen könnte. Vorteilhafterweise kann das erfindungsgemäße Verfahren in effizienter Weise mittels einer Software, beispielsweise auf der Rechenvorrichtung, durchgeführt werden. Ferner ist das erfindungsgemäße Verfahren im Vergleich zu bekannten Verfahren besonders robust.

Der Datensatz, der zur Ermittlung der minimalen Gesamtladeleistung herangezogen wird, betrifft den ersten Zeitraum (vergangener Zeitraum), der bezüglich des zweiten Zeitraumes (aktueller Zeitraum) in der Vergangenheit liegt. Daher sind vorteilhafterweise die Ankunftszeiten, Abfahrtszeiten und Ladeenergien der Elektrofahrzeuge des ersten Zeitraumes bekannt. Aus diesen bekannten Ankunftszeiten, Abfahrtszeiten und Ladeenergien kann die minimale Gesamtladeleistung mittels der Rechenvorrichtung ermittelt werden. Hierbei wird erfindungsgemäß die minimale Gesamtladeleistung derart ermittelt, dass alle Elektrofahrzeuge während des ersten Zeitraumes im Wesentlichen vollständig innerhalb ihrer Parkdauer geladen werden können. Hierbei ist die Parkdauer eines Elektrofahrzeuges durch den zeitlichen Unterschied zwischen seiner Abfahrtszeit und seiner Ankunftszeit festgelegt. Dadurch wird vorteilhafterweise sichergestellt, dass zum einen die minimale Gesamtladeleistung beim Laden der Elektrofahrzeuge nicht überschritten wird und zum anderen alle Elektrofahrzeuge innerhalb ihrer Parkdauer geladen werden. Hierbei ist zu beachten, dass die einzelnen Elektrofahrzeuge typischerweise mit einer von der minimalen Gesamtladeleistung verschiedenen geringeren Ladeleistung geladen werden. Die Summe der einzelnen Ladeleistungen ist schließlich stets kleiner gleich der minimalen Gesamtladeleistung.

Weiterhin werden durch das erfindungsgemäße Verfahren und durch die Ermittlung der minimalen Gesamtladeleistung Leistungsspitzen vermieden. Dadurch wird vorteilhafterweise ein Stromnetz, das die elektrische Energie zum Laden der Elektrofahrzeuge bereitstellt, weniger belastet.

Gemäß einer vorteilhaften Weiterbildung der Erfindung werden die Elektrofahrzeuge bezüglich ihres Ladens gemäß ihrer Ankunftszeiten innerhalb des zweiten Zeitraumes priorisiert.

Für die Ladevorgänge der einzelnen Elektrofahrzeuge kann eine einfache Heuristik, beispielsweise ein FCFS-Verfahren (engl. First-Come-First-Serve) verwendet werden. Hierbei wird für das FCFS-Verfahren als maximale Gesamtladeleistung die ermittelte minimale Gesamtladeleistung verwendet. Denkbar ist auch ein modifiziertes FCFS-Verfahren, welches Kenntnisse über Abfahrtszeiten und/oder Ladeenergien verwendet, um die noch nicht gestarteten Ladevorgänge entsprechend der verbleibenden Zeit bis zur Abfahrtszeit eines der Elektrofahrzeuge sowie entsprechend des jeweiligen Bedarfs an Ladeenergie zu priorisieren.

Ein Vorteil des FCFS-Verfahrens ist, dass mit dem Ladevorgang eines der Elektrofahrzeuge begonnen wird, sobald diese eintrifft, das heißt zur Ankunftszeit des Elektrofahrzeuges. Sollte für das Laden eines neu eintreffenden Elektrofahrzeuges die ermittelte minimale Gesamtladeleistung überschritten werden, so wird das Laden des genannten Elektrofahrzeuges solange ausgesetzt, bis eine ausreichende Ladeleistung verfügbar ist, sodass die momentane Gesamtladeleistung (Summe aller einzelnen momentanen Ladeleistungen) stets unterhalb der ermittelten minimalen Gesamtladeleistung verbleibt. Wird die Zeit in diskrete Zeitschritte unterteilt, so wartet das eingetroffene Elektrofahrzeug auf einen folgenden Zeitschritt. Am folgenden Zeitschritt wird das Elektrofahrzeug wieder wie ein neu angekommenes Elektrofahrzeug behandelt und es erfolgt eine erneute Prüfung, ob das Elektrofahrzeug geladen werden kann ohne die minimale Gesamtladeleistung zu überschreiten. Sind noch weitere Elektrofahrzeuge vorhanden, deren Ladevorgänge ausgesetzt sind, so werden diese in der Reihenfolge ihrer Ankunftszeiten priorisiert und gegebenenfalls (Summe aller Ladeleistungen kleiner gleich der minimalen Gesamtladeleistung) zum Ladevorgang zugelassen.

Gemäß einer weiteren vorteilhaften Ausgestaltung der Erfindung wird als erster Zeitraum ein erster Tag und als zweiter Zeitraum ein zweiter Tag verwendet, wobei der zweite Tag bezüglich seiner Benennung dem ersten Tag entspricht.

Mit anderen Worten stellt der erste Tag (vergangener Tag) einen Referenztag dar, an welchem die historischen Ankunftszeiten, Abfahrtszeiten und Ladeenergien, die den historischen Datensatz ausbilden, erfasst werden. Vorteilhafterweise entspricht der zweite Tag (aktueller Tag) bezüglich seiner Benennung dem ersten Tag. Mit anderen Worten erfolgt eine Klassifizierung in Tagen. Beispielsweise wird ein historischer Datensatz für einen Montag außerhalb der Ferienzeiten bereitgestellt. Der zweite Zeitraum entspricht dann wieder einem Montag, der bezüglich des Referenztages (vergangener Montag) in der Zukunft liegt. Zur Bereitstellung des historischen Datensatzes können über mehrere Jahre die Ankunftszeiten, Abfahrtszeiten und Ladeenergien der Elektrofahrzeuge aufgezeichnet und erfasst werden.

Mit anderen Worten wird vorteilhafterweise eine Mehrzahl von ersten Zeiträumen und zugehörigen historischen Datensätzen zur Ermittlung der minimalen Gesamtladeleistung bereitgestellt. Aus den ersten Zeiträumen und ihren zugehörigen Datensätzen kann ein Histogramm über die den ersten Zeiträumen zugehörigen minimalen Gesamtladeleistungen erzeugt werden. Hierzu werden die ersten Zeiträume in Klassen, beispielsweise gemäß ihrer Benennung als Wochentag, eingeteilt. Aus dem Histogramm der genannten zugehörigen minimalen Gesamtladeleistungen kann eine repräsentative minimale Gesamtladeleistung gewonnen werden. Die minimale Gesamtladeleistung wird vorteilhafterweise als die gewonnene repräsentative minimale Gesamtladeleistung festgelegt.

Es wird daher mittels der Ankunftszeiten, Abfahrtszeiten und Ladeenergien für jeden ersten Zeitraum gleicher Klasse zunächst eine obere Schranke der Gesamtladeleistung (zugehörige minimale Gesamtladeleistung) ermittelt. Hierbei ist darauf zu achten, dass unter der Verwendung der ermittelten oberen Schranke der Gesamtladeleistung alle Ladevorgänge innerhalb des ihr zugeordneten ersten Zeitraumes hätten noch ausgeführt werden können. Aus dem Histogramm kann dann die für alle ersten Zeiträume repräsentative minimale Gesamtladeleistung, die der ermittelten minimalen Gesamtladeleistung entspricht, gewonnen werden. Beispielsweise wird die minimale Gesamtladeleistung vorteilhafterweise im Bereich zwischen 90 Prozent und 98 Prozent Perzentil des Histogramms festgelegt.

In einer vorteilhaften Weiterbildung der Erfindung wird die elektrische Energie zum Laden der Elektrofahrzeuge mittels eines Stromnetzes eines Gebäudes bereitgestellt.

Vorteilhafterweise können dadurch die Elektrofahrzeuge in einer unmittelbaren Umgebung des Gebäudes, beispielsweise auf einem Parkplatz des Gebäudes, geladen werden. Insbesondere ist das Gebäude ein kommerziell genutztes, beispielsweise ein Bürogebäude, oder ein öffentliches Gebäude. Weiterhin kann das Gebäude bevorzugt ein Einfamilienhaus sein.

Gemäß einer weiteren vorteilhaften Ausgestaltung der Erfindung werden bei der Ermittlung der minimalen Gesamtladeleistung dem ersten Zeitraum zugehörige Wetterdaten berücksichtigt.

Dadurch wird vorteilhafterweise die Ermittlung der minimalen Gesamtladeleistung verbessert. Mit anderen Worten werden meteorologische Daten, beispielsweise Temperaturen und/oder Niederschlagswahrscheinlichkeiten, die sich auf die Ankunftszeiten, Abfahrtszeiten sowie Ladenenergien auswirken können, zur Ermittlung der minimalen Gesamtladeleistung verwendet. Insbesondere können die erfassten ersten Zeiträume, insbesondere die erfassten ersten Tage, nach den genannten meteorologischen Daten, das heißt nach ihrer Temperatur und/oder Niederschlagswahrscheinlichkeit, klassifiziert werden. Hieraus lässt sich vorteilhafterweise ein verbessertes Histogramm und somit eine verbesserte repräsentative minimale Gesamtladeleistung ermitteln.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: zwei mögliche Ladeverläufe einer Mehrzahl von Elektrofahrzeugen, wobei einer der Ladeverläufe gemäß dem erfindungsgemäßen Verfahren durchgeführt wird;
- Figur 2: eine Mehrzahl von Parkdauern und Ladedauern einer Mehrzahl von Elektrofahrzeugen; und
- Figur 3: eine weitere Mehrzahl von Parkdauern und Ladedauern einer Mehrzahl von Elektrofahrzeugen.

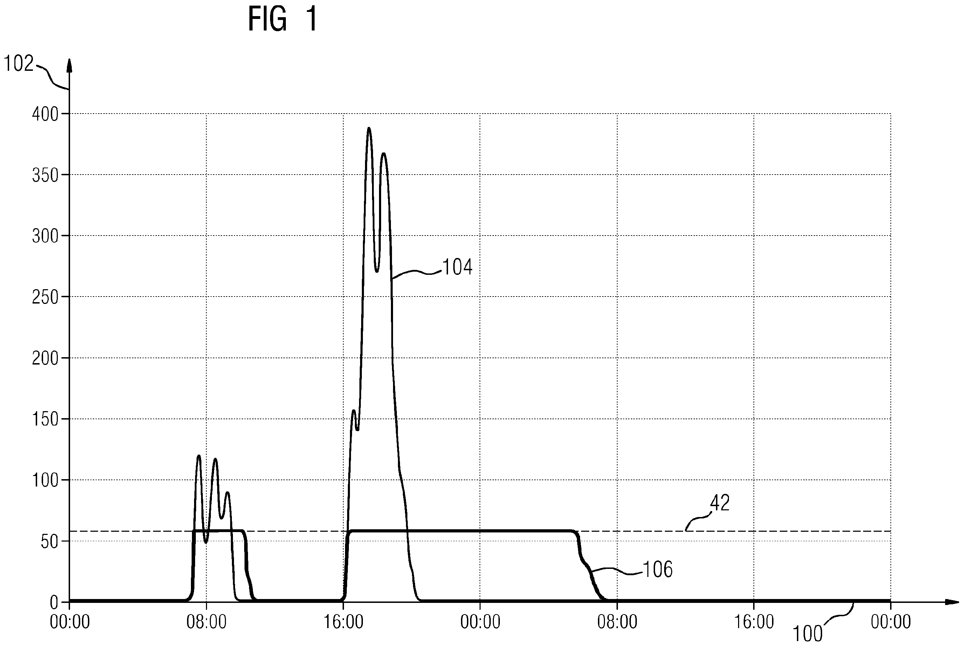

Gleichartige, gleichwertige oder gleichwirkende Elemente können in den Figuren mit denselben Bezugszeichen versehen sein. In Figur 1 sind ein exemplarischer erster und zweiter Ladeverlauf 104, 106 dargestellt. Der zweite Ladeverlauf 106 entspricht einem Ladeverlauf gemäß dem erfindungsgemäßen Verfahren.

Zur Ermittlung einer minimalen Gesamtladeleistung 42 sind an einem vergangenen Tag (erster Zeitraum) Ankunftszeiten, Abfahrtszeiten und Ladeenergien der Mehrzahl von Elektrofahrzeugen erfasst worden. An der Ordinate des in Figur 1 dargestellten Diagramms ist die momentane Gesamtladeleistung, die einem Stromnetz entnommen wird, in Kilowattstunden dargestellt. An der Abszisse 100 des Diagramms ist die Uhrzeit eines aktuellen Tages (zweiter Zeitraum) aufgetragen.

Der erste Ladeverlauf 104 entspricht einem FCFS-Verfahren ohne eine Beschränkung der momentanen Gesamtladeleistung. Hierbei beginnt jedes Elektrofahrzeug bei seiner Ankunftszeit unmittelbar mit seinem Ladevorgang und zwar mit der maximal möglichen Ladeleistung.

Aus dem dargestellten Diagramm kann entnommen werden, dass das FCFS-Verfahren ohne eine Beschränkung der momentanen Gesamtladeleistung zu Leistungsspitzen führt, die - wie beispielhaft dargestellt - um etwa 8:00 Uhr morgens und etwa 17:00 Uhr abends auftreten. Die vorliegende Erfindung ermöglicht es, die genannten Leistungsspitzen zu reduzieren oder zu verhindern. Hierzu wird aus einem historischen Datensatz, der die vergangenen Ankunftszeiten, Abfahrtszeiten und Ladeenergien der Elektrofahrzeuge am vergangenen Tag (erster Tag) umfasst, die minimale Gesamtladeleistung 42 ermittelt. Hieraus ergibt sich ein FCFS-Verfahren, bei dem beispielsweise eine Iteration über diskrete Zeitschritte durchgeführt wird. Die ermittelte minimale Gesamtladeleistung wird hierbei derart festgelegt, dass die Ladevorgänge der Elektrofahrzeuge innerhalb des vergangenen Tages (erster Zeitraum beziehungsweise erster Tag) während ihrer Parkdauer hätten beendet werden können. Gleichzeitig wird die minimale Gesamtladeleistung derart klein festgelegt (minimiert), dass die Leistungsspitzen vermindert werden oder nicht auftreten. Es ergibt sich hieraus ein Optimierungsproblem, das durch das erfindungsmäße Verfahren ausreichend gelöst wird und dessen Ergebnis die minimale Gesamtladeleistung 42 ist.

Die minimale Gesamtladeleistung 42 kann dann als obere Schranke des FCFS-Verfahrens oder eines modifizierten FCFS-Verfahrens verwendet werden. Hieraus ergibt sich der erfindungsgemäße zweite Ladeverlauf 106, der keine Leistungsspitzen aufweist.

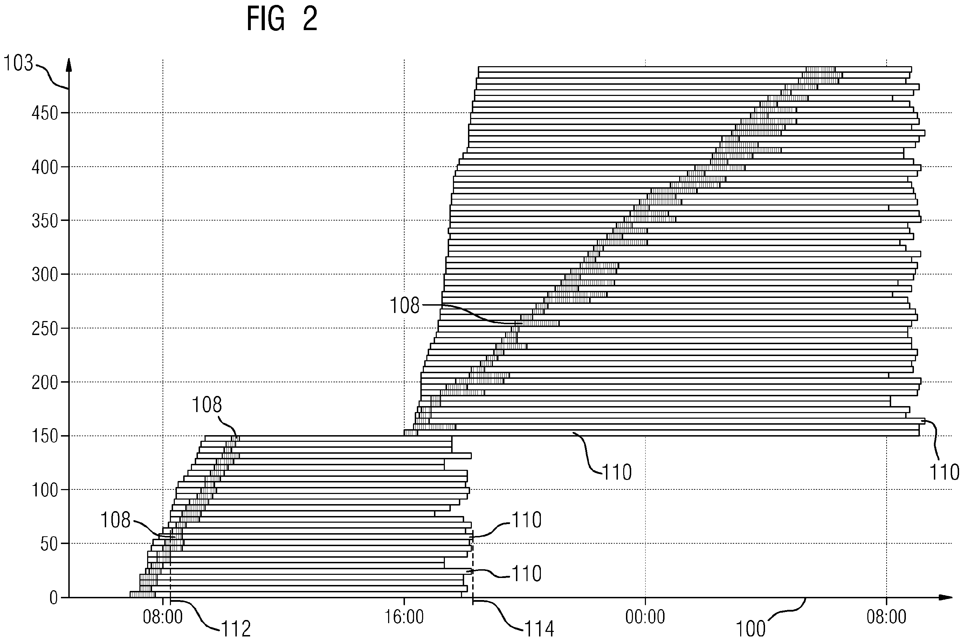

In Figur 2 ist eine Mehrzahl von Parkdauern 110 einer Mehrzahl von Elektrofahrzeugen dargestellt. An der Ordinate 103 des dargestellten Diagramms ist die Anzahl der Elektrofahrzeuge aufgetragen. An der Abszisse 100 des Diagramms ist die Uhrzeit des aktuellen Tages (zweiter Zeitraum) aufgetragen. Die Parkdauer 110 eines Elektrofahrzeuges ist durch die zeitliche Differenz seiner Abfahrtszeit 114 und seiner Ankunftszeit 112 bestimmt. Hierbei ist exemplarisch die Ankunftszeit 112 und die Abfahrtszeit 114 eines der Elektrofahrzeuge im Diagramm gekennzeichnet. Die Parkdauern der jeweiligen Elektrofahrzeuge sind durch die sich horizontal erstreckenden Balken 110 verdeutlicht. Ladedauern der Elektrofahrzeuge sind durch die schraffierten sich horizontal erstreckenden Balken 108 gekennzeichnet.

In dem dargestellten Beispiel parkt ein Teil der Elektrofahrzeuge während des Tages und ein weiterer Teil der Elektrofahrzeuge, der größer ist als der während des Tages parkende Teil, während der Nacht.

In dem in Figur 2 verdeutlichten Ladeverlauf, der der Gesamtheit der einzelnen Ladedauern 108 entspricht, würde die ermittelte minimale Gesamtladeleistung 42 (siehe Figur 1) durch die neu eintreffenden Elektrofahrzeuge überschritten, sodass das Laden der neu eintreffenden Elektrofahrzeuge nicht unmittelbar bei ihrer Ankunftszeit 112 erfolgt. Das Laden eines neu eintreffenden Elektrofahrzeuges erfolgt zu einem bezüglich seiner Ankunftszeit späteren Zeitpunkt, bei dem sichergestellt ist, dass die momentane Gesamtladeleistung zum Laden aller parkenden Elektrofahrzeuge unterhalb der ermittelten minimalen Gesamtladeleistung verbleibt. Dadurch wird vorteilhafterweise ein netzwerkschonendes Laden der Elektrofahrzeuge bereitgestellt und Leistungsspitzen können verhindert werden.

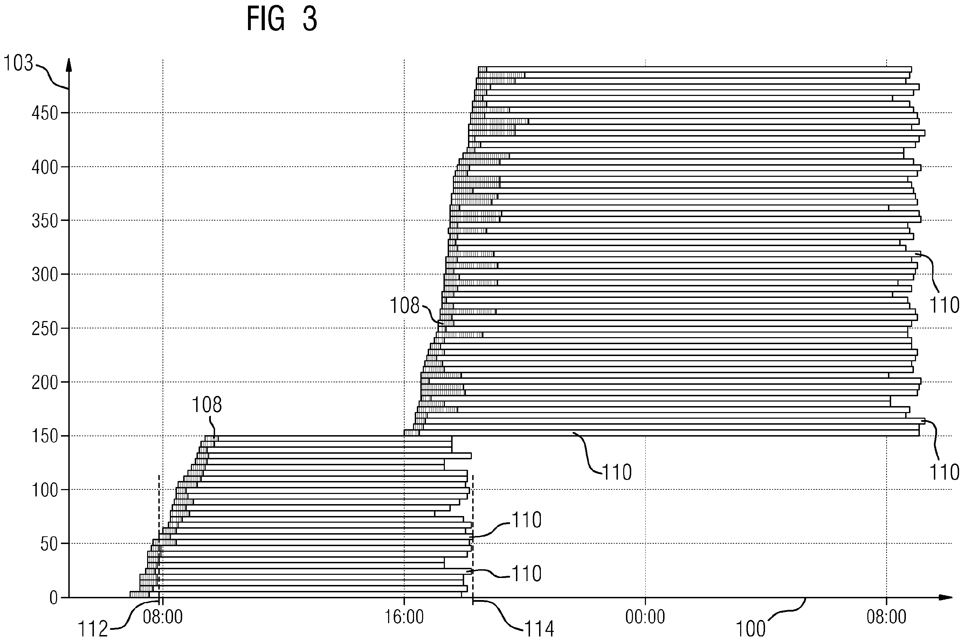

In Figur 3 ist ein im Wesentlichen zur Figur 2 analoger Sachverhalt dargestellt. Im Unterschied zu Figur 2 ist hier die momentane Gesamtladeleistung derart gering, dass neu eintreffende Elektrofahrzeuge unmittelbar nach ihrer Ankunft, das heißt zu ihrer Ankunftszeit 112, geladen werden ohne die minimale Gesamtladeleitung zu überschreiten. Das heißt, dass die momentane Gesamtladeleistung, die zum Laden aller parkenden Elektrofahrzeuge in jedem Zeitpunkt erforderlich ist, stets kleiner gleich der ermittelten minimalen Gesamtladeleistung ist. Mit anderen Worten wird ein Ladevorgang eines neu eintreffenden Elektrofahrzeuges nur dann ausgesetzt, wenn die zum Laden des Elektrofahrzeuges vorgesehene Ladeleistung in Summe mit den durch die parkenden Elektrofahrzeugen bereits beanspruchten Ladeleistungen die ermittelte minimale Gesamtladeleistung überschreitet.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

## Patentansprüche

1. Verfahren zur Steuerung von Ladevorgängen einer Mehrzahl von Elektrofahrzeugen, umfassend die Schritte:
- Bereitstellen eines Datensatzes, der Ankunftszeiten, Abfahrtszeiten und Ladeenergien der Elektrofahrzeuge während eines ersten Zeitraumes umfasst;
- Ermittlung einer minimalen Gesamtladeleistung (42) aus dem Datensatz mittels einer Rechenvorrichtung, wobei die ermittelte minimale Gesamtladeleistung (42) ein annähernd vollständiges Laden jedes Elektrofahrzeuges zwischen seiner Ankunftszeit (114) und Abfahrtszeit (112) ermöglicht; und
- Laden der Elektrofahrzeuge mit höchstens der ermittelten minimalen Gesamtladeleistung (42) während eines dem ersten Zeitraum folgenden zweiten Zeitraumes.

2. Verfahren gemäß Anspruch 1, bei dem die Elektrofahrzeuge bezüglich ihres Ladens gemäß ihrer Ankunftszeiten (112) innerhalb des zweiten Zeitraumes priorisiert werden.

3. Verfahren gemäß Anspruch 1 oder 2, bei dem als erster Zeitraum ein erster Tag und als zweiter Zeitraum ein zweiter Tag verwendet wird, wobei der zweite Tag bezüglich seiner Benennung dem ersten Tag entspricht.

4. Verfahren gemäß einem der vorhergehenden Ansprüche, bei dem zur Ermittlung der minimalen Gesamtladeleistung (42) eine Mehrzahl von ersten Zeiträumen und zugehörigen Datensätzen bereitgestellt wird, und bei dem ein aus den ersten Zeiträumen und Datensätzen erzeugtes Histogramm, das in Klassen von ersten Zeiträumen eingeteilt ist, zur Ermittlung der minimalen Gesamtladeleistung (42) verwendet wird.

5. Verfahren gemäß Anspruch 4, bei dem die minimale Gesamtladeleistung (42) als 90 Prozent oder 98 Prozent Perzentil des Histogramms festgelegt wird.

6. Verfahren gemäß einem der vorhergehenden Ansprüche, bei dem die elektrische Energie zum Laden der Elektrofahrzeuge mittels eines Stromnetzes eines Gebäudes bereitgestellt wird.

7. Verfahren gemäß einem der vorhergehenden Ansprüche, bei dem bei der Ermittlung der minimalen Gesamtladeleistung (42) dem ersten Zeitraum zugehörige Wetterdaten berücksichtigt werden.

## Claims

1. Method for controlling charging operations of a plurality of electric vehicles, comprising the steps of:
- providing a data record which comprises arrival times, departure times and charging energies of the electric vehicles during a first period;
- determining a minimum total charging power (42) from the data record by means of a computing apparatus, the determined minimum total charging power (42) making it possible to approximately completely charge each electric vehicle between its arrival time (114) and departure time (112); and
- charging the electric vehicles with at most the determined minimum total charging power (42) during a second period following the first period.

2. Method according to Claim 1, in which, with regard to their charging, the electric vehicles are prioritized according to their arrival times (112) within the second period.

3. Method according to Claim 1 or 2, in which a first day is used as the first period and a second day is used as the second period, the second day corresponding to the first day with respect to its designation.

4. Method according to one of the preceding claims, in which a plurality of first periods and associated data records are provided for the purpose of determining the minimum total charging power (42), and in which a histogram which is generated from the first periods and data records and is divided into classes of first periods is used to determine the minimum total charging power (42).

5. Method according to Claim 4, in which the minimum total charging power (42) is stipulated in the region between the 90% and the 98% percentile of the histogram.

6. Method according to one of the preceding claims, in which the electrical energy for charging the electric vehicles is provided by means of a power supply system of a building.

7. Method according to one of the preceding claims, in which weather data associated with the first period are taken into account when determining the minimum total charging power (42).

## Revendications

1. Procédé de commande d'opérations de charge d'une pluralité de véhicules électriques, comprenant les stades :
- on se procure un ensemble de données, qui comprend des temps d'arrivée, des temps de départ et des énergies de charge des véhicules électriques pendant un premier laps de temps ;
- on détermine une puissance (42) de charge d'ensemble minimum à partir de l'ensemble de données au moyen d'un système informatique, la puissance (42) de charge d'ensemble minimum déterminée rendant possible une charge à peu près complète de chaque véhicule électrique entre son temps (114) d'arrivée et son temps (112) de départ ; et
- on charge les véhicules électriques au plus à la puissance (42) de charge d'ensemble minimum déterminée pendant un deuxième laps de temps suivant le premier laps de temps.

2. Procédé suivant la revendication 1, dans lequel on donne la priorité aux véhicules électriques en ce qui concerne leur charge en fonction de leur temps (112) d'arrivée dans le deuxième laps de temps.

3. Procédé suivant la revendication 1 ou 2, dans lequel on utilise, comme premier laps de temps, un premier jour et, comme deuxième laps de temps, un deuxième jour, le deuxième jour correspondant, en ce qui concerne sa dénomination, au premier jour.

4. Procédé suivant l'une des revendications précédentes, dans lequel, pour déterminer la puissance (42) de charge d'ensemble minimum, on prend une pluralité de premiers laps de temps et d'ensembles de données associés et dans lequel on utilise, pour la détermination de la puissance (42) de charge d'ensemble minimum, un histogramme, qui est produit à partir des premiers laps de temps et ensembles de données et qui est réparti en classe de premiers laps de temps.

5. Procédé suivant la revendication 4, dans lequel on fixe la puissance (42) de charge d'ensemble minimum à 90 pourcent ou 98 pourcent par centile de l'histogramme.

6. Procédé suivant l'une des revendications précédentes, dans lequel on se procure l'énergie électrique pour la charge des véhicules électriques au moyen d'un réseau de courant d'un bâtiment.

7. Procédé suivant l'une des revendications précédentes, dans lequel, pour la détermination de la puissance (42) de charge d'ensemble minimum, on prend en compte des données météorologiques associées aux premiers laps de temps.
